# EUROPEAN PATENT APPLICATION

(11) **EP 4 120 109 A1**
(43) Date of publication of application: **18.01.2023**
(21) Application number: 22757466.2
(22) Date of filing: 18.02.2022
(51) Int. Cl.: G06F 21/44

(54) **CLUSTER ACCESS METHOD AND APPARATUS, ELECTRONIC DEVICE, AND MEDIUM**

(30) Priority: 27.05.2021 CN 202110606924
(71) Applicant: BEIJING BAIDU NETCOM SCIENCE AND TECHNOLOGY CO. LTD., 100085 Beijing (CN)
(72) Inventor: LIN, Zhanbo, Beijing 100085 (CN)
(74) Representative: Regimbeau
(86) International application number: PCT/CN2022/076922
(87) International publication number: WO 2022/247359

(57) **Abstract**

Provided are a cluster access method and apparatus, an electronic device and a medium. The cluster access method includes: acquiring a current client password from a cluster access request sent by a client and authenticating the client according to the current client password; and in the case where the client is successfully authenticated, sending a cluster access simulation request to a gateway server of a target cluster so as to establish a connection between the client and the target cluster, where the cluster access simulation request is obtained through simulation of the client based on a user impersonation technique.

## Description

This application claims priority to Chinese Patent Application No. 202110606924.6 filed with the China National Intellectual Property Administration (CNIPA) on May 27, 2021, the disclosure of which is incorporated herein by reference in its entirety.

### TECHNICAL FIELD

The present disclosure relates to the field of computer technology and the field of container technology, cloud computing technology and cloud service technology, for example, a cluster access method and apparatus, an electronic device and a medium.

### BACKGROUND

With the development of Kubernetes technology, different infrastructures within a public cloud and a private cloud can communicate without barriers. The mainstream communication method is that a cloud service provider manages Kubernetes clusters in different regions in a unified manner.

Before a client desires to access a Kubernetes cluster, the client generally needs to be authenticated by a gateway server of the Kubernetes cluster.

### SUMMARY

The present disclosure provides a method and apparatus for establishing a connection between a client and a cluster, an electronic device and a medium.

According to an aspect of the present disclosure, a cluster access method is provided. The method includes the steps below.

A current client password is acquired from a cluster access request sent by a client and the client is authenticated according to the current client password.

In the case where the client is successfully authenticated, a cluster access simulation request is sent to a gateway server of a target cluster so as to establish a connection between the client and the target cluster, where the cluster access simulation request is obtained through simulation of the client based on a user impersonation technique.

According to another aspect of the present disclosure, a cluster access apparatus is provided. The apparatus includes an authentication module and a communication connection module.

The authentication module is configured to acquire a current client password from a cluster access request sent by a client and authenticate the client according to the current client password.

The communication connection module is configured to: in the case where the client is successfully authenticated, send a cluster access simulation request to a gateway server of a target cluster so as to establish a connection between the client and the target cluster, where the cluster access simulation request is obtained through simulation of the client based on a user impersonation technique.

According to another aspect of the present disclosure, an electronic device is provided. The electronic device includes at least one processor and a memory communicatively connected to the at least one processor.

The memory stores an instruction executable by the at least one processor to enable the at least one processor to perform the preceding cluster access method.

According to another aspect of the present disclosure, a non-transitory computer-readable storage medium is provided. The non-transitory computer-readable storage medium is configured to store a computer instruction for causing a computer to perform the preceding cluster access method.

According to another aspect of the present disclosure, a computer program product is provided. The computer program product includes a computer program which, when executed by a processor, causes the processor to perform the preceding cluster access method.

### BRIEF DESCRIPTION OF DRAWINGS

FIG. 1 is a flowchart of a cluster access method according to an embodiment of the present disclosure;
FIG. 2 is a flowchart of another cluster access method according to an embodiment of the present disclosure;
FIG. 3 is a structural diagram of a cluster access apparatus according to an embodiment of the present disclosure; and
FIG. 4 is a block diagram of an electronic device for implementing a cluster access method according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are illustrative only. The description of well-known functions and constructions is omitted hereinafter for clarity and conciseness.

In a cluster access process, a client directly sends a cluster access request to a gateway server of a target cluster, and the gateway server authenticates the client through an OpenID Connect scheme. However, by default, the gateway server does not enable the support of the OpenID Connect scheme, which can be enabled only after the gateway server is configured with parameters of the OpenID Connect scheme.

However, since the gateway server needs to be configured with parameters, the gateway server is invaded and a running environment of the gateway server is changed. Due to that the gateway server is a bridge for constructing a connection between an outside and a cluster, the security risk of the cluster is undoubtedly increased and the security of the cluster is reduced.

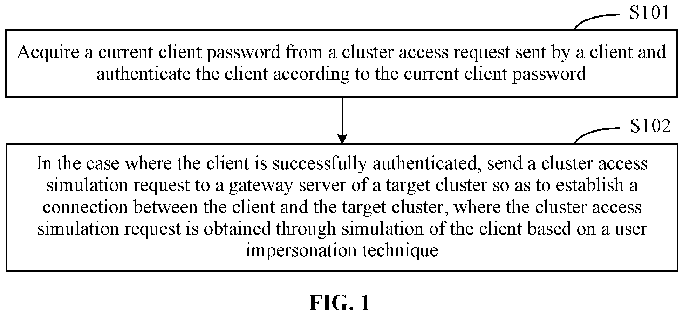

FIG. 1 is a flowchart of a cluster access method according to an embodiment of the present disclosure. This embodiment is applicable to the case where a connection is established between a client and a cluster. The method in this embodiment may be performed by a cluster access apparatus according to an embodiment of the present disclosure. The apparatus may be implemented by software and/or hardware and integrated in any electronic device having a computing capability.

As shown in FIG. 1, the cluster access method disclosed in this embodiment may include the steps below.

In S101, a current client password is acquired from a cluster access request sent by a client and the client is authenticated according to the current client password.

The client represents a user equipment used by a user who desires to access a target cluster and may be software installed in a smart device or a web browser. A form of the client is not limited in this embodiment. The cluster represents a set of devices that implement the same service function. For example, the cluster in this embodiment optionally includes a Kubernetes cluster, that is, a group of node computers that run containerized application programs.

In one embodiment, the client sends the cluster access request for the target cluster to a proxy server through address information exposed by the proxy server in advance, such as a Uniform Resource Locator (URL) address. After acquiring the cluster access request, the proxy server parses the cluster access request to determine whether the cluster access request contains the current client password. If the cluster access request does not contain the current client password, the proxy server immediately rejects the access of the client to the target cluster. If the cluster access request contains the current client password, the proxy server determines a validity period of the current client password and then determines whether the current client password expires. If the current client password expires, the proxy server rejects the access of the client to the target cluster. If the current client password does not expire, the proxy server authenticates the client according to the current client password. An authentication manner includes, but is not limited to, at least one of the implementations below.
(1) The client encrypts the current client password using a private key, generates the cluster access request according to the encrypted current client password, and sends the cluster access request to the proxy server. The proxy server decrypts the encrypted current client password using a public key. If the decrypted current client password is the same as a standard client password issued to the client in advance, the client is successfully authenticated.
(2) The client encrypts the current client password using its own standard client identifier as an interference code, generates the cluster access request according to the encrypted current client password, and sends the cluster access request to the proxy server. The proxy server decrypts the encrypted current client password using a current client identifier of the client. If the decryption succeeds, the client is successfully authenticated.
(3) The client authorizes the proxy server to acquire standard client information of the client, and the proxy server generates a standard client password according to the standard client information and returns the standard client password to the client. The client sends the cluster access request carrying the current client password to the proxy server. The proxy server parses the current client password to obtain current client information and compares the current client information with the standard client information. If the comparison succeeds, the client is successfully authenticated.

The implementation manner of authenticating the client according to the current client password is not limited in this embodiment, and any identity authentication manner based on the client password is within the scope of this embodiment.

The current client password is acquired from the cluster access request sent by the client and the client is authenticated according to the current client password so that the client is authenticated based on the proxy server, ensuring the security of the access of the client to the cluster.

In S102, in the case where the client is successfully authenticated, a cluster access simulation request is sent to a gateway server of the target cluster so as to establish a connection between the client and the target cluster, where the cluster access simulation request is obtained through simulation of the client based on a user impersonation technique.

In one embodiment, after the client is successfully authenticated by the proxy server, the client is simulated using the user impersonation technique so that the cluster access simulation request of the client for the target cluster is generated. The user impersonation technique is a technique for one user to simulate another user to perform a related operation. In this embodiment, the proxy server simulates the client to send the cluster access request to the gateway server of the target cluster. The proxy server sends the generated cluster access simulation request to the gateway server of the target cluster. Since the cluster access simulation request is obtained through the simulation of the client based on the user impersonation technique, from the perspective of the gateway server, it is equivalent to the client sending the cluster access request to the gateway server so that the gateway server exposes an externally accessible specified port to the client in response to the cluster access simulation request and the client accesses the target cluster based on the specified port.

In the case where the client is successfully authenticated, the cluster access simulation request is sent to the gateway server of the target cluster so as to establish the connection between the client and the target cluster, thereby simulating the client to send the cluster access request to the gateway server. Therefore, in the case where the client is successfully authenticated by the proxy server, the connection between the client and the target cluster can be established.

In the present disclosure, the current client password is acquired from the cluster access request sent by the client and the client is authenticated according to the current client password so that the process of authenticating the client is performed by the proxy server instead of the gateway server, avoiding the problem in the related art where the client is authenticated by the gateway server and thus the gateway server is invaded and the security risk of the cluster is caused and improving the security of the cluster. The proxy server simulates the client to send the cluster access request to the gateway server based on the user impersonation technique, ensuring that the connection between the client and the cluster can be established even through the cluster access simulation request sent by the proxy server so that the client can access the target cluster smoothly.

On the basis of the preceding embodiments, the method further includes the steps below.

A rights information update of the target cluster is determined according to a rights configuration operation of a user on the target cluster. The target cluster is controlled according to the rights information update to update rights information.

The rights information represents related attribute information of rights of the cluster and includes, but is not limited to, a rights rule and information about an authorized person. The rights rule defines the content of the rights of the cluster, such as a right to "access namespace A" or a right to "modify namespace A". The information about the authorized person represents an object to which any rights rule is applicable. For example, if user A is endowed with rights rule A, user A is the authorized person of rights rule A.

In one embodiment, the proxy server is communicatively connected to multiple managed clusters. The user configures rights information of the target cluster in the corresponding front end of the proxy server, and the proxy server determines the rights information update of the target cluster in response to the rights configuration operation of the user in the front end and controls the managed target cluster to update current rights information to the rights information update.

For example, the preceding embodiment is explained by using the Kubernetes cluster as an example.

The user performs a rights information configuration on a target Kubernetes cluster in the corresponding front end of the proxy server, which includes, but is not limited to, a "Role" configuration, a "ClusterRole" configuration, a "Rolebinding" configuration, a "Cluster Rolebinding" configuration and the like. "Role" represents a rights rule for a namespace in any Kubernetes cluster, "ClusterRole" represents a rights rule for any Kubernetes cluster itself, "Rolebinding" represents information about an authorized person corresponding to any "Role" in any Kubernetes cluster, and "Cluster Rolebinding" represents information about an authorized person of any "ClusterRole" in any Kubernetes cluster. The proxy server determines a rights information update of at least one of "Role", "ClusterRole", "Rolebinding" or "Cluster Rolebinding" according to the rights configuration operation of the user and correspondingly controls the target Kubernetes cluster to update rights information. For example, if the user configures "Role" of the target Kubernetes cluster in the front end, the proxy server correspondingly updates the target Kubernetes cluster with the configured "Role" synchronously.

The rights information update of the target cluster is determined according to the rights configuration operation of the user on the target cluster and the target cluster is controlled according to the rights information update to update the rights information so that the unified management of rights information of clusters based on the proxy server is implemented, improving the management efficiency of rights information of clusters.

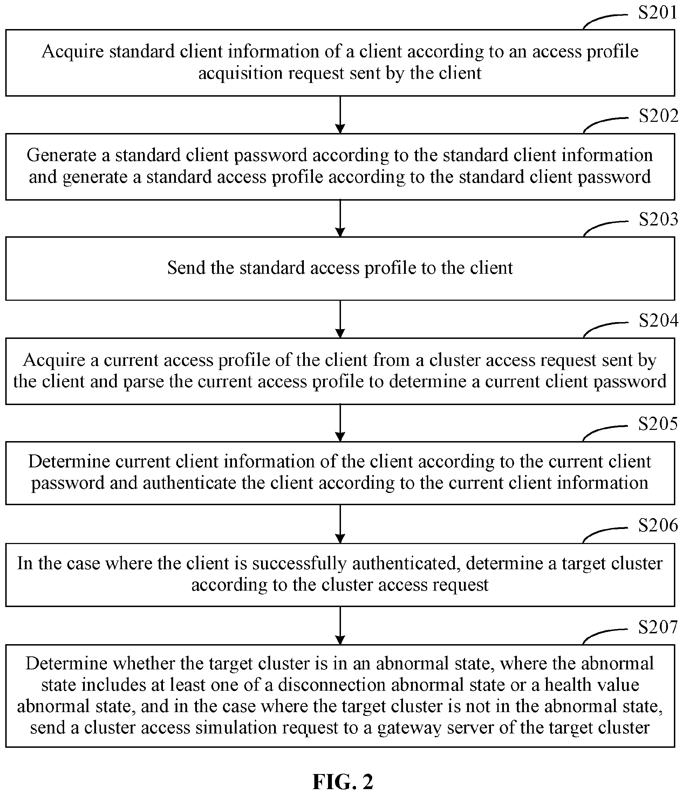

FIG. 2 is a flowchart of another cluster access method according to an embodiment of the present disclosure. An extension is performed based on the preceding technical solution and may be combined with the preceding optional embodiments.

As shown in FIG. 2, the cluster access method disclosed in this embodiment may include the steps below.

In S201, standard client information of a client is acquired according to an access profile acquisition request sent by the client.

An access profile is a certificate required by the client to access a cluster, and each client needs to access the cluster based on the access profile. The access profile needs to be applied for by the client to an authority. The standard client information is some private information of the client, such as a name of the client and a state of the client.

In one embodiment, the client sends the access profile acquisition request to a proxy server according to address information exposed by the proxy server. The proxy server applies to the client for the standard client information according to the access profile acquisition request and acquires the standard client information of the client when authorized by the client.

For example, this embodiment provides an implementation manner of S201 in a real scenario.

A user logs in to a browser and inputs the address information of the proxy server into the browser to send the access profile acquisition request to the proxy server. The proxy server forwards the access profile acquisition request to an identity service component, and the identity service component controls the browser to jump and display a personal information authorization interface according to a preset authorization protocol such as Open Authorization 2.0 (OAuth 2.0). The user performs a personal information authorization operation in the personal information authorization interface of the browser, including, but not limited to, an authorization according to an account and a password, an authorization according to a two-dimensional code, an authorization according to a verification code and the like. After the user authorizes personal information, the identity service component acquires the personal information of the user from a third-party server associated with the browser.

In S202, a standard client password is generated according to the standard client information and a standard access profile is generated according to the standard client password.

In one embodiment, the standard client information is encoded using a preset encoding technique such as Base64 encoding so as to generate load information; likewise, information of a type of the standard client password and information about a signature algorithm are encoded using the encoding technique so as to generate header information; the load information and the header information are encrypted using the signature algorithm so as to generate signature information; finally, the standard client password is generated according to the header information, the load information and the signature information. The standard access profile containing the standard client password is generated according to the standard client password.

In S203, the standard access profile is sent to the client.

In one embodiment, the proxy server feeds back the generated standard access profile to the client so that the client subsequently performs cluster access through a cluster access request containing the standard access profile.

In S204, a current access profile of the client is acquired from a cluster access request sent by the client and parsed so that a current client password is determined.

In one embodiment, the client sends the current access profile containing the current client password to the proxy server, and the proxy server parses the current access profile and extracts the current client password from a preset field area.

When the client performs the cluster access through the cluster access request, the current access profile in the cluster access request is not necessarily the standard access profile obtained by the client in S203. Therefore, the proxy server needs to parse and verify the current access profile in the cluster access request to ensure that the client performs the cluster access through the cluster access request containing the standard access profile.

In S205, current client information of the client is determined according to the current client password and the client is authenticated according to the current client information.

In one embodiment, after acquiring the current client password, the proxy server decodes a load information portion of the current client password to obtain a password expiration time and determines whether the current client password expires based on current time and the password expiration time. If the current client password does not expire, the proxy server extracts load information and header information from the current client password, calculates signature information again, and compares the calculated signature information with signature information in the current client password. If the calculated signature information is consistent with the signature information in the current client password, the proxy server decodes the load information to obtain the current client information. Then, the client is authenticated according to the current client information. An authentication manner includes, but is not limited to, the manners below. (1) The current client information is compared with the standard client information; if the current client information is consistent with the standard client information, the client is determined to be valid, that is, the client is successfully authenticated. (2) A state of the client corresponding to the current client information is acquired from the third-party server through a data interface and the client is authenticated according to the state of the client. For example, if it is determined that the state of the client is abnormal, the client fails to be authenticated.

In S206, in the case where the client is successfully authenticated, a target cluster is determined according to the cluster access request.

In one embodiment, the proxy server determines the target cluster according to a target cluster identifier contained in the cluster access request. In this embodiment, multiple clients send their respective cluster access requests to the proxy server. Therefore, each client adds the target cluster identifier to the cluster access request so that the proxy server determines the target cluster corresponding to each cluster access request according to the target cluster identifier.

In S207, it is determined whether the target cluster is in an abnormal state, where the abnormal state includes at least one of a disconnection abnormal state or a health value abnormal state; and in the case where the target cluster is not in the abnormal state, a cluster access simulation request is sent to a gateway server of the target cluster.

The disconnection abnormal state represents that the cluster is disconnected from the gateway server, and the health value abnormal state represents that some indicator data of the cluster is abnormal, for example, an occupancy rate of a central processing unit (CPU) is too high or its remaining available memory is too small.

In one embodiment, the proxy server periodically checks a connection state and a health value of each cluster in a list-watch manner. When determining that the target cluster is in the abnormal state, the proxy server stops sending the cluster access simulation request to the gateway server of the target cluster. If the target cluster is not in the abnormal state, the cluster access simulation request is sent to the gateway server of the target cluster. The gateway server establishes a connection with the client according to the received cluster access simulation request.

In the present disclosure, the standard client information of the client is acquired according to the access profile acquisition request sent by the client, the standard client password is generated according to the standard client information, and the standard access profile is generated according to the standard client password and sent to the client, thereby laying a foundation for the client to access the target cluster according to the standard access profile and ensuring smooth cluster access; the current access profile of the client is acquired from the cluster access request and parsed so that the current client password is determined, thereby laying a foundation for subsequently authenticating the client according to the current client password; the current client information of the client is determined according to the current client password and the client is authenticated according to the current client information, thereby authenticating the client and improving the security of the cluster access; the target cluster is determined according to the cluster access request, thereby determining the target cluster that each client desires to access and laying a foundation for subsequently sending the cluster access simulation request to the target cluster; it is determined whether the target cluster is in the abnormal state, where the abnormal state includes at least one of the disconnection abnormal state or the health value abnormal state, and in the case where the target cluster is not in the abnormal state, the cluster access simulation request is sent to the gateway server of the target cluster, thereby ensuring that the target cluster can be normally accessed and avoiding the problem of a failure of the client to access the target cluster.

The acquisition, storage, application and the like of personal information of a user involved in the technical solutions of the present disclosure are in compliance with relevant laws and regulations and do not violate the public order and good customs.

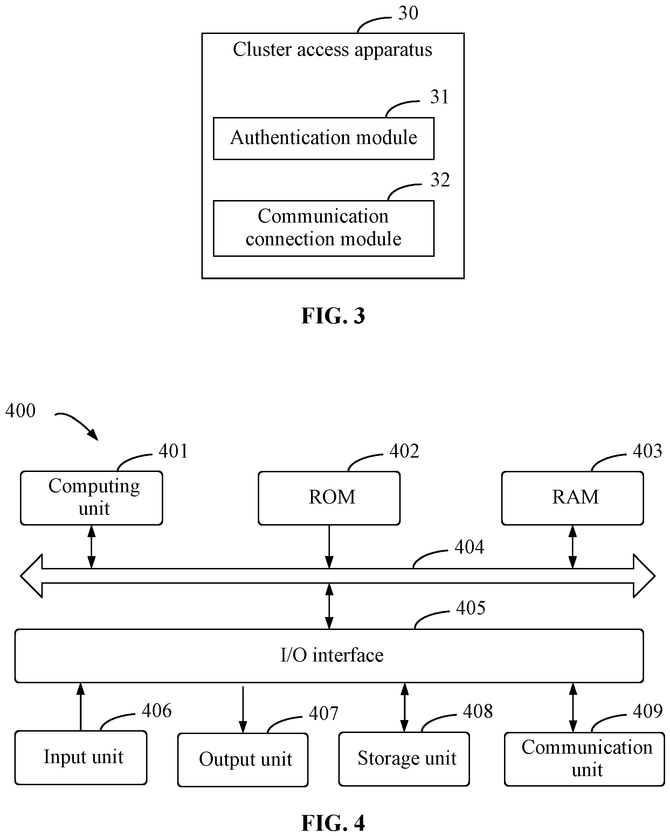

FIG. 3 is a structural diagram of a cluster access apparatus according to an embodiment of the present disclosure. This embodiment is applicable to the case where a connection is established between a client and a cluster. The apparatus in this embodiment may be implemented by software and/or hardware and integrated in any electronic device having a computing capability.

As shown in FIG. 3, a cluster access apparatus 30 disclosed in this embodiment may include an authentication module 31 and a communication connection module 32.

The authentication module 31 is configured to acquire a current client password from a cluster access request sent by a client and authenticate the client according to the current client password. The communication connection module 32 is configured to: in the case where the client is successfully authenticated, send a cluster access simulation request to a gateway server of a target cluster so as to establish a connection between the client and the target cluster, where the cluster access simulation request is obtained through simulation of the client based on a user impersonation technique.

Optionally, the apparatus further includes a target cluster determination module.

The target cluster determination module is configured to determine the target cluster according to the cluster access request.

Optionally, the authentication module 31 is configured to acquire the current client password from the cluster access request sent by the client in the manner below.

A current access profile of the client is acquired from the cluster access request and parsed so that the current client password is determined.

Optionally, the apparatus further includes an access profile sending module.

The access profile sending module is configured to: acquire standard client information of the client according to an access profile acquisition request sent by the client; generate a standard client password according to the standard client information and generate a standard access profile according to the standard client password; and send the standard access profile to the client.

Optionally, the authentication module 31 is configured to authenticate the client according to the current client password in the manner below.

Current client information of the client is determined according to the current client password and the client is authenticated according to the current client information.

Optionally, the apparatus further includes an abnormal state determination module.

The abnormal state determination module is configured to determine whether the target cluster is in an abnormal state, where the abnormal state includes at least one of a disconnection abnormal state or a health value abnormal state. The communication connection module 32 is configured to send the cluster access simulation request to the gateway server of the target cluster in the following manner: in the case where the target cluster is not in the abnormal state, the cluster access simulation request is sent to the gateway server of the target cluster.

Optionally, the apparatus further includes a rights information update module.

The rights information update module is configured to determine a rights information update of the target cluster according to a rights configuration operation of a user on the target cluster and control, according to the rights information update, the target cluster to update rights information.

The cluster access apparatus 30 according to the embodiment of the present disclosure may perform a cluster access method according to an embodiment of the present disclosure and has function modules and effects corresponding to the method performed. For content not described in detail in this embodiment, reference may be made to description in any method embodiment of the present disclosure.

According to embodiments of the present disclosure, the present disclosure further provides an electronic device, a readable storage medium and a computer program product.

FIG. 4 is a block diagram illustrative of an exemplary electronic device 400 that may be used for implementing embodiments of the present disclosure. The electronic device 400 is intended to represent various forms of digital computers, for example, laptop computers, desktop computers, worktables, personal digital assistants, servers, blade servers, mainframe computers and other applicable computers. The electronic device 400 may also represent various forms of mobile devices, for example, personal digital assistants, cellphones, smartphones, wearable devices and other similar computing devices. Herein the shown components, the connections and relationships between these components and the functions of these components are illustrative only and are not intended to limit the implementation of the present disclosure as described and/or claimed herein.

As shown in FIG. 4, the device 400 includes a computing unit 401. The computing unit 401 may perform various appropriate actions and processing according to a computer program stored in a read-only memory (ROM) 402 or a computer program loaded into a random-access memory (RAM) 403 from a storage unit 408. Various programs and data required for operations of the device 400 may also be stored in the RAM 403. The computing unit 401, the ROM 402 and the RAM 403 are connected to each other through a bus 404. An input/output (I/O) interface 405 is also connected to the bus 404.

Multiple components in the device 400 are connected to the I/O interface 405. The multiple components include an input unit 406 such as a keyboard and a mouse, an output unit 407 such as various types of display and speaker, the storage unit 408 such as a magnetic disk and an optical disk, and a communication unit 409 such as a network card, a modem and a wireless communication transceiver. The communication unit 409 allows the device 400 to exchange information/data with other devices over a computer network such as the Internet and/or over various telecommunication networks.

The computing unit 401 may be various general-purpose and/or special-purpose processing components having processing and computing capabilities. Examples of the computing unit 401 include, but are not limited to, a CPU, a graphics processing unit (GPU), a special-purpose artificial intelligence (AI) computing chip, a computing unit executing machine learning model algorithms, a digital signal processor (DSP), and any appropriate processor, controller and microcontroller. The computing unit 401 performs the preceding method and processing, such as a cluster access method. For example, in some embodiments, the cluster access method may be implemented as a computer software program tangibly contained in a machine-readable medium such as the storage unit 408. In some embodiments, part or all of computer programs may be loaded and/or installed on the device 400 via the ROM 402 and/or the communication unit 409. When the computer program is loaded onto the RAM 403 and executed by the computing unit 401, one or more steps of the preceding cluster access method may be performed. Alternatively, in other embodiments, the computing unit 401 may be configured, in any other suitable manner (for example, by means of firmware), to perform the cluster access method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting data and instructions to the memory system, the at least one input device and the at least one output device.

Program codes for implementation of the method of the present disclosure may be written in any combination of one or more programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device or any appropriate combination thereof. Examples of the machine-readable storage medium may include an electrical connection based on one or more wires, a portable computer disk, a hard disk, a RAM, a ROM, an erasable programmable read-only memory (EPROM) or a flash memory, an optical fiber, a portable compact disc read-only memory (CD-ROM), an optical storage device, a magnetic storage device or any appropriate combination thereof.

In order that interaction with a user is provided, the systems and techniques described herein may be implemented on a computer. The computer has a display device (for example, a cathode-ray tube (CRT) or a liquid-crystal display (LCD) monitor) for displaying information to the user; and a keyboard and a pointing device (for example, a mouse or a trackball) through which the user can provide input for the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

A computer system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in the service of a traditional physical host and a virtual private server (VPS). The server may also be a server of a distributed system or a server combined with a blockchain.

Various forms of the preceding flows may be used, with steps reordered, added or removed. For example, multiple steps described in the present disclosure may be executed in parallel, in sequence or in a different order as long as the desired results of the technical solutions disclosed in the present disclosure are achieved. The execution sequence of these steps is not limited herein.

## Claims

1. A cluster access method, comprising:
acquiring a current client password from a cluster access request sent by a client and authenticating the client according to the current client password; and
in a case where the client is successfully authenticated, sending a cluster access simulation request to a gateway server of a target cluster so as to establish a connection between the client and the target cluster, wherein the cluster access simulation request is obtained through simulation of the client based on a user impersonation technique.

2. The method of claim 1, before sending the cluster access simulation request to the gateway server of the target cluster, further comprising:
determining the target cluster according to the cluster access request.

3. The method of claim 1, wherein acquiring the current client password from the cluster access request sent by the client comprises:
acquiring a current access profile of the client from the cluster access request and parsing the current access profile to determine the current client password.

4. The method of claim 1, before acquiring the current client password from the cluster access request sent by the client, further comprising:
acquiring standard client information of the client according to an access profile acquisition request sent by the client;
generating a standard client password according to the standard client information and generating a standard access profile according to the standard client password; and
sending the standard access profile to the client so that the client performs cluster access through a cluster access request containing the standard access profile.

5. The method of claim 1, wherein authenticating the client according to the current client password comprises:
determining current client information of the client according to the current client password and authenticating the client according to the current client information.

6. The method of claim 1, wherein
in the case where the client is successfully authenticated, before sending the cluster access simulation request to the gateway server of the target cluster, the method further comprises:
determining whether the target cluster is in an abnormal state, wherein the abnormal state comprises at least one of a disconnection abnormal state or a health value abnormal state; and
sending the cluster access simulation request to the gateway server of the target cluster comprises:
in a case where the target cluster is not in the abnormal state, sending the cluster access simulation request to the gateway server of the target cluster.

7. The method of claim 1, further comprising:
determining a rights information update of the target cluster according to a rights configuration operation of a user on the target cluster; and
controlling, according to the rights information update, the target cluster to update rights information.

8. A cluster access apparatus, comprising:
an authentication module, which is configured to acquire a current client password from a cluster access request sent by a client and authenticate the client according to the current client password; and
a communication connection module, which is configured to: in a case where the client is successfully authenticated, send a cluster access simulation request to a gateway server of a target cluster so as to establish a connection between the client and the target cluster, wherein the cluster access simulation request is obtained through simulation of the client based on a user impersonation technique.

9. The apparatus of claim 8, further comprising a target cluster determination module, which is configured to:
determine the target cluster according to the cluster access request.

10. The apparatus of claim 8, wherein the authentication module is configured to acquire the current client password from the cluster access request sent by the client in the following manner:
acquiring a current access profile of the client from the cluster access request and parsing the current access profile to determine the current client password.

11. The apparatus of claim 8, further comprising an access profile sending module, which is configured to:
acquire standard client information of the client according to an access profile acquisition request sent by the client;
generate a standard client password according to the standard client information and generate a standard access profile according to the standard client password; and
send the standard access profile to the client so that the client performs cluster access through a cluster access request containing the standard access profile.

12. The apparatus of claim 8, wherein the authentication module is configured to authenticate the client according to the current client password in the following manner:
determining current client information of the client according to the current client password and authenticating the client according to the current client information.

13. The apparatus of claim 8, further comprising an abnormal state determination module, which is configured to:
determine whether the target cluster is in an abnormal state, wherein the abnormal state comprises at least one of a disconnection abnormal state or a health value abnormal state;
wherein the communication connection module is configured to send the cluster access simulation request to the gateway server of the target cluster in the following manner:
in a case where the target cluster is not in the abnormal state, sending the cluster access simulation request to the gateway server of the target cluster.

14. The apparatus of claim 8, further comprising a rights information update module, which is configured to:
determine a rights information update of the target cluster according to a rights configuration operation of a user on the target cluster; and
control, according to the rights information update, the target cluster to update rights information.

15. An electronic device, comprising:
at least one processor; and
a memory communicatively connected to the at least one processor;
wherein the memory stores an instruction executable by the at least one processor to enable the at least one processor to perform the cluster access method of any one of claims 1 to 7.

16. Anon-transitory computer-readable storage medium, which is configured to store a computer instruction for causing a computer to perform the cluster access method of any one of claims 1 to 7.

17. A computer program product, comprising a computer program which, when executed by a processor, causes the processor to perform the cluster access method of any one of claims 1 to 7.
